# EUROPEAN PATENT APPLICATION

(11) **EP 3 321 012 A1**
(43) Date of publication of application: **16.05.2018**
(21) Application number: 17200195.0
(22) Date of filing: 06.11.2017
(51) Int. Cl.: B22F 3/105, B22F 8/00, B22F 9/08, C22B 7/00, B22F 9/00

(54) **ADDITIVE MANUFACTURING PROCESS WITH METAL CHIPS PRODUCED BY MACHINING PROCESSES AS FEEDSTOCK**

(30) Priority: 11.11.2016 US 201615349576
(71) Applicant: United Technologies Corporation, Farmington, CT 06032 (US)
(72) Inventor: VAN HASSEL, Bart Antonie, Weatogue, CT Connecticut 06089 (US); EL-WARDANY, Tahany Ibrahim, Bloomfield, CT Connecticut 06002 (US)
(74) Representative: Tsang, Olivia

(57) **Abstract**

A manufacturing process includes collecting metal chips produced by a subtractive manufacturing processes and sorting the metal chips. The process further includes heating the metal chips to form a melt, removing impurities from the melt, deoxidizing the melt and atomizing the melt to form metal powder. The powder is then used to form a metal part by additive manufacturing or powder metallurgy processes.

## Description

### BACKGROUND

This invention relates generally to manufacturing of brackets, fuel injectors, lubricant nozzles, blades, vanes, compressor parts, impellers, complex housings, sensor probes, heat exchangers, static mixers, fan blades, fixtures, tools, and other components. In particular the invention relates to the use of recycled alloys to manufacture components.

The high cost of superalloy and titanium alloy components in aerospace engines and structures raises the buy-to-fly ratio that is an important consideration in design and manufacturing. For instance, over half of the ingot cost of titanium is related to the extraction of the metal from the ore through the Kroll process. Introduction of qualified scrap to the component manufacturing process can directly decrease the cost. Each time an alloy component is entered as scrap in a recycling stream and reemerges in ingot form as recycled alloy for future fabrication, the assurance of component quality as to alloy chemistry and microstructure of the recycled material is managed for successful application of the component in service. Restricting the sources of scrap and recycling operations for superalloys and titanium alloys for aerospace applications to the identical alloys of the original components can eliminate systematic downgrading of the quality of the replacement parts. Finding sources of alloy scrap with the required alloy chemistry that may yield acceptable microstructures is a challenge.

### SUMMARY

A manufacturing process includes collecting metal chips produced by a subtractive machining process and sorting the metal chips. The process further includes heating the metal chips to form a melt, removing impurities from the melt, deoxidizing the melt, and atomizing the melt to form metal powder. The powder is then used to form a metal part by additive manufacturing or powder metallurgy processes.

In an embodiment a method of forming a recycled metal alloy component by additive manufacturing or powder metallurgy processes includes obtaining clean, sorted metal chips of the alloy using a subtractive machining process. It further includes heating the clean, sorted metal chips to form a melt. Additives that chemically interact with impurities that float on the surface to be removed and/or deoxidizers such as silica that remove oxides are added to the melt. Atomizing the melt forms metal alloy powder. The method concludes by forming the alloy powder into a recycled metal alloy component having the original metal alloy chemistry by an additive manufacturing process or powder metallurgy process.

### BRIEF DESCRIPTION OF THE DRAWINGS

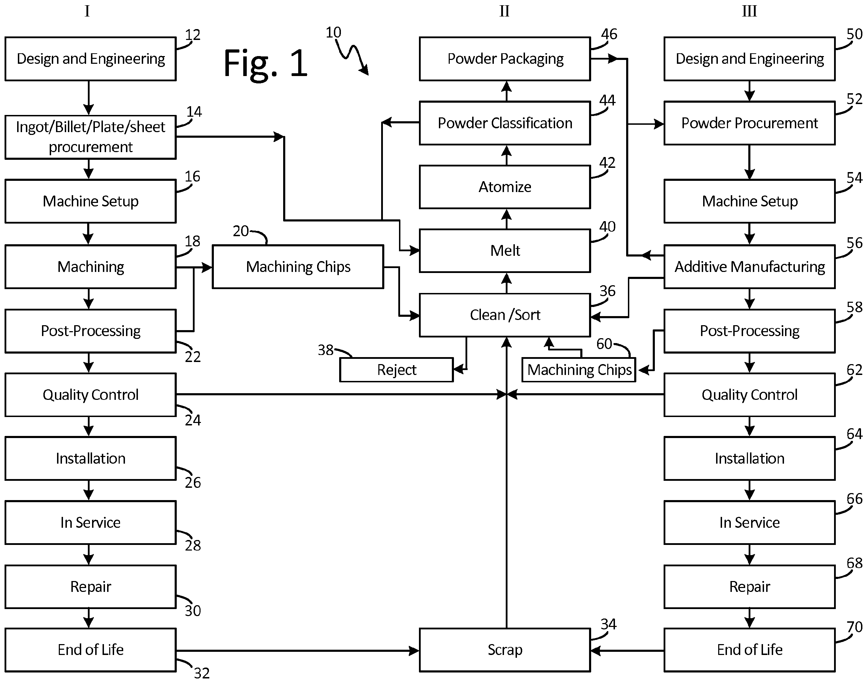

FIG. 1 is flow diagram of an additive manufacturing operation using metal chips as feedstock.

### DETAILED DESCRIPTION

Aerospace components tend to have a high buy-to-fly ratio due to the need for strong but lightweight structures. Subtractive manufacturing processes produce a large amount of metal chips of expensive alloys such as Ti-6A1-4V ELI (extra low interstitial). Alloys of the metal chips often get downgraded and become a feedstock for other alloys such as ferrotitanium. This is undesirable from a sustainability point of view.

Disclosed herein is a manufacturing process in which metal chips produced by conventional machining (e.g., sawing, turning, drilling, and milling processes) and from post processing of articles produced by additive manufacturing are used as a feedstock for the production of metal powders to be used for additive manufacturing or powder metallurgy processes, such as, for example, laser powder bed fusion (LPBF), electron beam melting (EBM), powder base directed energy deposition (DED), laser engineered net shaping (LENS), directed light fabrication, direct metal deposition, 3D laser cladding and others. The metal chips are collected, cleaned and sorted. Some metal chips may be rejected due to contamination or other reasons. The metal chips may be consolidated by pressing or briquetting and subsequently melted, cleaned from impurities, deoxidized and atomized into a fine metal powder, preferably in an inert atmosphere. The resulting powder may be classified over a wide range of particle sizes. Some powder may be recycled back to the melt as it is either too fine or too coarse for additive manufacturing or other powder metallurgical procedures. A significant fraction of the powder may be used for additive manufacturing and to build parts. The parts may pass through a sequence of steps from post-processing, quality control, installation, in-service operation, maintenance and repair and may ultimately reach their end of life. The parts may be collected at their end of life and enter the cleaning and sorting process for reuse of the expensive alloys. In this manufacturing process, additive manufacturing takes advantage of the availability of metal chips of expensive alloys that otherwise would be downgraded into less expensive alloys. The proposed manufacturing process exploits the synergy between conventional manufacturing and additive manufacturing with the metal chips as the connecting element.

In an embodiment, the proposed process may lend itself to a hybrid manufacturing process, wherein metal removed from a part by a subtractive process as metal chips may be recycled by the present process into powder of the identical alloy of the part. The recycled powder may then be used to build features on the part by an additive manufacturing process.

Manufacturers expend substantial energy into metal alloys during the production process that starts with mining and the reduction of metal ores and continues with blending of various metals into a well-controlled alloy composition and a heat treatment to achieve desirable properties. Downgrading metal chips for the production of a lower grade alloy is common practice but can be considered a waste of energy. The benefit of the process disclosed herein is that it avoids the downgrading of metal chips by utilizing the alloy as feedstock to a metal atomization process in which metal powder is produced for additive manufacturing that has the same alloy composition as the metal chips. The aerospace industry is in a unique position, as conventional machining and additive manufacturing can be expected to be used side-by-side because some parts will cost less when machined by conventional methods, while other parts can be produced at a lower cost by additive manufacturing due to the complexity of the part.

Alloys of particular interest in the present disclosure include, but are not limited to nickel based, cobalt based and iron based superalloys, titanium based alloys, and mixtures thereof.

FIG. 1 is a process flow diagram of an example of a general manufacturing process 10 where expensive high performance alloy metal chips are used as revert in metal recycling to guarantee the alloy integrity of metal powder for additive manufacturing Three manufacturing sub-processes are indicated on the diagram. Column I defines a process to produce a metal alloy component. Column II defines a process to produce clean alloy powder feedstock for an additive manufacturing process to form parts made of the same alloy as the components produced in Column I. Column III defines a process to produce components of the same alloy as the original components by powder based additive manufacturing.

The initial step in a manufacturing process may be design and engineering of a metal alloy component (step 12). In this step the physical design of the component as well as the alloy design are determined. In the next step the materials necessary for the build may be procured (step 14). Raw forms of specific alloys used may be in ingot form that may be subsequently thermal mechanically processed through billet, plate, and/or sheet forms. Machines to form the alloys to required engineering shapes may then be set up (step 16). Common machining procedures are necessarily subtractive manufacturing procedures where metal is removed from the raw stock. Three examples of subtractive machining processes are turning, drilling, and milling, wherein material is removed in the form of chips as a result of a cutting tool cutting through a workpiece at predefined depths of cut and feed rates (step 18).

Conventional machining may employ cutting fluids that enhance chip formation and cool the workpiece/chip interface during machining. Cutting fluids may comprise water containing additives, mineral or petroleum oils, oil based synthetic lubricants, biocides, and corrosion inhibitors. Metal chips that are exposed to conventional cutting fluids may be contaminated with carbonaceous residues, surface oxides, and tooling residue. After machining, parts may be post processed to final form (step 22). Post processing may include mechanical and chemical finishing, plating, identity marking, and other treatments known in the art. The parts may then pass through quality control inspection (step 24) and may be installed in, for instance, a turbine engine (step 26).

The service life of a component starts at this point (step 28). Service longevity is a major concern in engineering systems. Components may be routinely removed from service for repair following major and/or minor component or system failure (step 30). When a component cannot be repaired, its lifetime may be finished (step 32) and the component or system may be considered scrap (step 34).

In many engineering systems, certain components may be intrinsically valuable for a number of reasons. The component may be formed from expensive and hard to produce alloys where the cost of replacement versus recycling is prohibitive. This is particularly the case for modern high temperature superalloys and titanium alloys for gas turbine engine applications. It may be beneficial for high value scrap to be recycled without degrading the alloy chemistry of the scrap stream in order to produce material with chemistry and properties of the original alloy. If possible, the scrapped component may be comminuted and added to recovered metal chips as part of the reclaimed alloy powder stream in Column II of the present invention.

Recovered metal chips (step 20) and comminuted alloy scrap components (step 34) may be cleaned and sorted in preparation for melting (step 36). Material deemed not suitable for recycling is rejected (step 38).

Chips that have been formed by conventional machining processes using flood cooling are often contaminated with cooling fluids containing water, mineral oils, synthetic oils, corrosion inhibitors, emulsifiers, biocides, and other chemicals. A method of cleaning the chips may include washing in water with a detergent and rinsing with water. The washed metal chips may be dried (e.g. in air at about 120°C) and subsequently rinsed with a solvent such as ethanol to remove any remaining oil based lubricant on the chips. The chips may then be dried a second time.

Another method to form metal chips with minimal contamination may be to machine with no lubricants or other fluids. Dry cutting speeds and depths of cut may be determined to successfully machine alloys and superalloys made of various materials. Studies have shown that machining titanium alloys without cutting fluids has no significant influence on chip oxidation.

Another method to form metal chips with minimal contamination is by cryogenic machining. Cryogenic machining (utilizing liquid nitrogen) may produce clean metal chips with substantial benefits for downstream processing into metal powder for additive manufacturing. First, the tool life has been reported to be three times longer for cutting titanium alloys, which implies that metal chips will contain fewer hard metal inclusions from tool wear (such as tungsten carbide, silicon nitride, or cubic boron nitride). Even higher increases in tool life have been reported for cutting steel alloys. Second, the metal chips will not have been contaminated with coolant fluids. This may eliminate the need for secondary processes to clean the metal chips.

The next step in the recycling process may be to melt the metal chips and comminuted scrap in order to atomize the melt to form usable powder feedstock for additive manufacturing (step 40). A natural process that will transform the chips into a form that can be transported and stored is briquetting. Briquetting is the process of consolidating or reducing the volume of metal chips by compressing the chips to a volume ratio of about 8 to 1. The resulting briquettes are more convenient to store, less susceptible to corrosion, and easier to transport as feedstock to a molten metal atomizer. It has been estimated that it may be sufficient to consolidate the chips to a 30% relative density in order for the chips to be suitable for vacuum induction and/or arc melting. Some alloys such as Ti-6Al-4V are reactive towards refractories used in melting furnaces. In that case, a different melting technique is used, and metal chips may need to be consolidated in the form of electrodes that are induction melted by an electrode induction-melt inert gas atomization (EIGA) technique. It is expected that the density of the electrodes of consolidated metal chips may need to be increased to about 70% or higher in order to achieve sufficient mechanical properties and dimensional stability for a successful electrode in the EIGA process.

The EIGA process involves rod-shaped electrodes that are lowered into position adjacent to induction coils to perform induction melting that melts the electrodes. In the case of titanium alloys, high density electrodes may be obtained by pressing the metal chips and comminuted scrap at elevated temperatures. Porosity in the electrode is expected to have an effect on the heating rate and on the flow of molten alloy at the tip of the electrode when using induction or arc melting. Titanium alloys are preferably melted in a vacuum. Induction heating or arc melting are preferred melting options.

The melt stream from the induction or arc melting of the consolidated machine chips and comminuted scrap electrodes may then be directed under inert gas into a gas atomizer where the molten stream encounters high pressure inert gas streams that atomize the melt (step 42). The atomized melt subsequently solidifies into spherical particles in the form of a powder by atomization techniques, such as liquid atomization, gas atomization, rotary atomization, and others known in the art. The powders may then be classified and sorted according to size (step 44) and packaged as feedstock for subsequent additive manufacturing procedures (step 46).

In an embodiment, although not shown on Fig. 1, the melt may be directly formed into wire feedstock instead of powder for wire arc additive manufacturing (WAAM) to form high purity alloy components of the invention.

Column III of FIG. 1 illustrates the additive manufacturing of components using high quality alloy powder reclaimed from metal chips and comminuted scrap shown in Column II of FIG. 1. The first step in the production of alloy components using high quality powder from metal chips and comminuted primary alloy scrap components may be design and engineering of a metal alloy component produced by additive manufacturing (step 50). The next step may be reclaimed alloy powder procurement from the production flow shown in Column II of FIG. 1 (step 52). Machine setup for subsequent additive manufacturing using a reclaimed powder as feedstock may be the next step (step 54). Additive manufacturing procedures and equipment are well known in the industry. Two types of additive manufacturing processes that may use reclaimed powder feed stock are powder bed fusion (PBF) and direct energy deposition (DED), for example. Powder bed fusion includes all processes where focused energy (electron beam or laser beam) may be used to selectively melt or sinter a layer of a powder bed. For metals, melting is typically used instead of sintering. Direct energy deposition includes all processes where focused energy generates a melt pool in which feedstock is deposited. This process may use a laser, arc, or electron beam heat source. The feedstock may be either powder or a wire. The most popular forms of DED use a laser heat source to melt a stream of powder feedstock. In the next step, a part is formed by additive manufacturing procedures (step 56). Additive manufactured components are rarely produced in final form and post processing operations are routinely used to achieve final dimensions. Machining is commonly used for this step. The metal chips formed in this step may be collected and added to the recycle stream of Column II in FIG. 1 (step 60).

The additively manufactured component then passes through quality control inspection (step 62) and may be installed in, for instance, a gas turbine engine (step 64). The service life of the additively manufactured component starts at this point (step 66). Components may be routinely removed from service for repair following major and/or minor components or system failure (step 68). When a component cannot be repaired, its lifetime is finished (step 70) and the component may be considered scrap (step 34).

In an embodiment, another production route for high quality alloy powder reclaimed from metal chips and comminuted scrap is the production of components using conventional powder metallurgy technology, which can be substituted for additive manufacturing in step 56. This technology includes, but is not limited to, die pressing and sintering, powder forging, isostatic pressing and sintering, hot isostatic pressing, (HIP), metal injection molding, electric current assisted sintering, spark plasma sintering, microwave sintering, and others known in the art.

### Discussion of Possible Embodiments

The following are non-exclusive descriptions of possible embodiments of the present invention.

A manufacturing process may include: collecting metal chips produced by subtractive machining processes; cleaning and sorting the metal chips; heating the metal chips to form a melt; removing impurities from the melt; deoxidizing the melt; atomizing the melt to form metal powder; using the metal powder to form a metal part by additive manufacturing or by a powder metallurgy process.

The process of the preceding paragraph can optionally include, additionally and/or alternatively any, one or more of the following features, configurations and/or additional components:

The subtractive machining process includes turning, drilling, milling, and/or combinations thereof.

The machining process may include machining with cutting fluids and/or lubricants, cryogenic machining, dry machining, or combinations thereof.

The metal chips may be formed of a metal selected from the group consisting of nickel base, cobalt base, and iron base superalloys, titanium alloys and mixtures thereof.

Cleaning the metal chips may comprise solvent cleaning.

Heating the metal chips to form a melt may include inert gas induction melting, vacuum induction melting, inert gas consumable arc melting, vacuum consumable arc melting, and mixtures thereof.

Removing impurities from the melt and deoxidizing the melt may include using additives to chemically interact with the impurities and flow to the melt surface and adding deoxidizers to the melt.

Atomizing the melt to form metal powder may include inert gas atomizing, vacuum atomizing, or mixtures thereof.

Additive manufacturing may include material jetting, powder bed fusion, directed energy deposition, wire arc additive manufacturing, or mixtures thereof.

Comminuted alloy scrap components may be added to the metal chips before the heating the chips to form a melt.

A method of forming a recycled metal alloy component by additive manufacturing may include: obtaining clean, sorted metal chips of the metal alloy using a subtractive machining process; heating the clean sorted metal chips to form a melt; removing impurities form the melt; deoxidizing the melt; atomizing the melt to form metal alloy powder; and forming the metal alloy powder into the recycled metal alloy component by an additive manufacturing or powder metallurgy process.

The method of the preceding paragraph can optionally include, additionally and/or alternatively any, one or more of the following features, configurations and/or additional components:

The metal alloy component may be formed of materials selected from the group consisting of nickel base, cobalt base, iron base superalloys, titanium alloys, and mixtures thereof.

The machining process may include turning, drilling, milling, and or mixtures thereof.

The machining process may include machining with cutting fluids and/or lubricants, cryogenic machining, dry machining, and mixtures thereof.

The machining chips may be cleaned by solvent cleaning.

Heating the clean sorted metal chips to form a melt may include inert gas induction melting, vacuum induction melting, inert gas consumable arc melting, vacuum consumable arc melting, and mixtures thereof.

Removing impurities from the melt and deoxidizing the melt may include using additives to chemically interact with impurities and flow to the melt surface and adding deoxidizers to the melt.

Atomizing the melt to form metal alloy powder may include inert gas atomizing, vacuum atomizing, or mixtures thereof.

The additive manufacturing process may include material jetting, powder bed fusion, directed energy deposition, wire arc additive manufacturing, or mixtures thereof.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A manufacturing process comprising:
collecting metal chips produced by a subtractive machining process;
cleaning and sorting the metal chips;
heating the metal chips to form a melt;
removing impurities from the melt;
deoxidizing the melt;
atomizing the melt to form metal powder;
using the metal powder to form a metal part by additive manufacturing or by a powder metallurgy process.

2. The manufacturing process of claim 1, wherein the subtractive machining process comprises turning, drilling, milling, or combinations thereof.

3. The manufacturing process of claim 1 or 2, wherein the machining process comprises machining with cutting fluids and/or lubricants, cryogenic machining, dry machining, or combinations thereof.

4. The manufacturing process of claim 1, 2 or 3, wherein the metal workpiece and the metal chips are formed of a metal material selected from the group consisting of nickel base, cobalt based and iron based superalloys, titanium alloys and mixtures thereof.

5. The manufacturing process of any preceding claim, wherein additive manufacturing comprises material jetting, powder bed fusion, directed energy deposition, wire arc additive manufacturing or mixtures thereof.

6. The manufacturing process of any preceding claim, wherein comminuted alloy scrap components are added to the metal chips before heating the metal chips to form the melt.

7. A method of forming a recycled metal alloy component by additive manufacturing comprising:
obtaining clean, sorted metal chips of the metal alloy using a subtractive machining process;
heating the clean, sorted metal chips to form a melt;
removing impurities from the melt;
deoxidizing the melt;
atomizing the melt to form metal alloy powder; and
forming the metal alloy powder into the recycled metal alloy component by an additive manufacturing or powder metallurgy process.

8. The method of claim 7, wherein the metal alloy component is composed of material selected from the group consisting of nickel base, cobalt base, iron base superalloys, titanium alloys and mixtures thereof.

9. The method of claim 7 or 8, wherein the metal chips are formed by a machining process that includes turning, drilling, milling, or mixtures thereof.

10. The method of claim 9, wherein the machining process comprises machining with cutting fluids and/or lubricants, cryogenic machining, dry machining or mixtures thereof.

11. The manufacturing process of any one of claims 1-6 or the method of any one of claims 7-10, wherein the machining chips are cleaned by solvent cleaning.

12. The manufacturing process of any one of claims 1-6 or the method of any one of claims 7-11, wherein heating the clean, sorted metal chips to form the melt comprises inert gas induction melting, vacuum induction melting, inert gas consumable arc melting, vacuum consumable arc melting or combinations or mixtures thereof.

13. The manufacturing process of any one of claims 1-6 or the method of any one of claims 7-12, wherein removing impurities from the melt comprises using additives to chemically interact with the impurities and flow to the melt surface and deoxidizing the melt comprises adding deoxidizers to the melt.

14. The manufacturing process of any one of claims 1-6 or the method of any one of claims 7-13, wherein atomizing the melt to form metal alloy powder comprises inert gas atomizing, vacuum atomizing, or mixtures thereof.

15. The method of any one of claims 7-14, wherein forming the metal alloy powder into the recycled metal alloy component by an additive manufacturing process comprises material jetting, powder bed fusion, directed energy deposition, wire arc additive manufacturing, or mixtures thereof.
